# EUROPEAN PATENT APPLICATION

(11) **EP 4 002 751 A1**
(43) Date of publication of application: **25.05.2022**
(21) Application number: 21020569.6
(22) Date of filing: 16.11.2021
(51) Int. Cl.: H04L 9/08, H04L 67/1097, H04L 9/40

(54) **COMPUTER SYSTEM, DEVICE, AND METHOD FOR SECURING SENSITIVE DATA IN THE CLOUD**

(30) Priority: 16.11.2020 US 202063114246 P
(71) Applicant: Magnet Forensics Inc., Waterloo, ON N2K 0A8 (CA)
(72) Inventor: SALIBA, Jad John, Waterloo, Ontario N2K 0A8 (CA); PARKHILL, Mike, Waterloo, Ontario N2K 0A8 (CA); McKHIGHT, Chris, Waterloo, Ontario N2K 0A8 (CA)
(74) Representative: Humphrey-Evans, Edward John

(57) **Abstract**

Systems, devices, and methods for securing sensitive data in the cloud are provided. The system includes a cloud server including a cloud service and a client device communicatively connected to the cloud server. The client device executes a client user interface ("UI") module configured to: upon a first login of the first user to the cloud service, generate an asymmetric keypair including a public key and a private key, store the private key in a local storage on the client device, and send the public key to the cloud server; and, in response to a user command to upload case data to the cloud service, generate a symmetric case key, encrypt sensitive data of the case data using the symmetric case key, encrypt the symmetric case key using the public key, and send the case data, the encrypted sensitive data, and the encrypted symmetric case key to the cloud server.

## Description

### Technical Field

The following relates generally to digital forensics, and more particularly to systems and methods for securing sensitive forensic data in the cloud.

### Introduction

Increasingly, application providers are looking to move their applications to the cloud in order to benefit from the many advantages associated with cloud-based applications. Cloud-based applications can be easy to implement and may allow businesses to retain the same applications and business processes without having to deal with having to manage backend technical issues. Cloud-based applications may provide improved accessibility, such as by enabling users to access their data anytime, anywhere. This may increase enterprise productivity and efficiency by ensuring the application is always accessible. Improved accessibility may provide users of cloud-based applications with an ability to easily collaborate and share with other users across multiple locations. Cloud-based applications may obviate the need for application providers to maintain a physical storage location through cloud hosting. Cloud-based applications may also reduce costs, increase flexibility for growth, and provide efficient recovery of applications and data.

While there can be many advantages to moving applications to the cloud, there can be disadvantages as well. In particular, data and information stored in the cloud are no longer under the control of the application provider. Application providers are forced to trust that the measures implemented by a given cloud service provider are sufficient to prevent unauthorized access to data. If a cloud instance is breached by circumventing the cloud service provider's security measures, the infiltrator may gain access to data of the application provider's users.

Users may be particularly reluctant to use cloud-based applications in domains where the data being uploaded to, managed and stored in the cloud is particularly sensitive. In the example situation described above of a cloud instance being breached, such sensitive data may be exposed to the infiltrator and fall into the wrong hands. One example of such a domain is digital forensic investigation. Digital forensics platforms may be used to upload, store, process, and analyze forensic data related to investigations (criminal, corporate, etc.). Such forensic data may include very sensitive material, such as pictures or videos, that must be managed in such a way that access to the forensic data is strictly limited and restricted to only those who are authorized to view it. In some cases, the forensic data is extremely sensitive, such as in child exploitation cases including child sexual abuse material ("CSAM" or "CSA material"). Forensic investigators who use or may use such digital forensic platforms may be reluctant to adopt a cloud-based application for fear of having such forensic data be subject to unauthorized access. Similarly, users in other domains (e.g. financial) may have similar concerns about sensitive data being exposed in cloud-based applications.

Accordingly, systems and methods are desired for securing sensitive data in cloud-based applications.

### Summary

A system for securing sensitive forensic data in the cloud is provided. The system includes a cloud server including a processor configured to execute a cloud service, the cloud server in communication with a cloud data storage, and a client device having a first user, the client device communicatively connected to the cloud server via a network, the client device including a processor configured to execute a client user interface ("UI") module for communicating with the cloud service. The client UI module is configured to: upon a first login of the first user to the cloud service, generate an asymmetric keypair for the first user including a first user public key and a first user private key, store the first user private key in a local storage on the client device, and send the first user public key to the cloud server. The client UI module is further configured to: in response to a user command to upload case data to the cloud service, generate a symmetric case key, encrypt sensitive forensic data of the case data using the symmetric case key to generate encrypted sensitive forensic data, encrypt the symmetric case key using the first user public key to generate a first user encrypted symmetric case key, and send the case data, the encrypted sensitive forensic data, and the first user encrypted symmetric case key to the cloud server. The cloud service is configured to store the case data, the encrypted sensitive forensic data, and the first user encrypted symmetric case key in the cloud data storage.

The client UI module may be further configured to: upon viewing the case data, receive the case data and the encrypted sensitive forensic data from the cloud server, decrypt the encrypted sensitive forensic data using the symmetric case key to obtain unencrypted sensitive forensic data, and display the unencrypted sensitive forensic data.

The symmetric case key used to decrypt the encrypted sensitive forensic data may be received from the cloud server as the first user encrypted symmetric case key and decrypted using the first user private key.

The client UI module may be further configured to authorize a second user to view the case data by: sending a request to the cloud service to authorize a second user to view the case data, receiving a second user public key from the cloud server, encrypting the symmetric case key using the second user public key to generate a second user encrypted symmetric case key, and sending the second user encrypted case key to the cloud service for storage in the cloud data storage.

The client UI module may be further configured to authorize a second user to view the case data by: sending a request to the cloud service to authorize a second user to view the case data, receiving the first user encrypted symmetric case key and a second user public key from the cloud service, decrypting the first user encrypted symmetric case key using the first user private key, encrypting the symmetric case key using the second user public key to generate a second user encrypted symmetric case key, and sending the second user encrypted symmetric case key to the cloud service for storage in the cloud data storage.

The client UI module may be further configured to: in response to the user command, generate a second symmetric case key; and determine whether to encrypt the sensitive forensic data with the symmetric case key or the second symmetric case key based on a classification group assigned to the sensitive forensic data.

The client UI module may be further configured to: encrypt the encrypted sensitive forensic data using a second symmetric case key based on a determination that the sensitive forensic data is of a particular classification group. The case data may be transmitted between the cloud service and the client UI module as a stream of data, wherein the encrypted sensitive forensic data is embedded within the stream of data. The client UI module may be further configured to pad the symmetric case key according to a padding scheme prior to encrypting the symmetric case key.

The local storage on the client device may be persistent browser storage. The local storage on the client device may be credential storage as provided by an operating system of the client device. The client device may include a browser session storage, and the client UI module may be further configured to use the browser session storage to cache the unencrypted sensitive forensic data after decryption.

The cloud service may be configured to delete a user's encrypted symmetric case key upon authorization of such user to view the case data being revoked.

The client UI module may be further configured to display a message notifying the user of the asymmetric keypair generation during or after generation of the asymmetric keypair. The case data may comprise processed data and raw data, wherein the raw data includes the encrypted sensitive forensic data.

A computing device for securing sensitive data in the cloud is also provided. The computing device includes a processor in communication with a memory, the processor configured to execute a client user interface ("Ul") module for communicating with a cloud service via a network. The client UI module is configured to: upon a first login of the first user to the cloud service, generate an asymmetric keypair for the first user including a first user public key and a first user private key, store the first user private key in a local storage on the client device, and send the first user public key to the cloud server. The client UI module is further configured to: in response to a user command to upload first data to the cloud service, generate a symmetric case key, encrypt sensitive data of the first data using the symmetric key to generate encrypted sensitive data, encrypt the symmetric key using the first user public key to generate a first user encrypted symmetric key, and send the first data, the encrypted sensitive data, and the first user encrypted symmetric key to the cloud server.

The client UI module may be further configured to: upon viewing the first data, receive the first data and the encrypted sensitive data from the cloud server, decrypt the encrypted sensitive data using the symmetric key to obtain unencrypted sensitive data, and display the unencrypted sensitive data. The symmetric key used to decrypt the encrypted sensitive data may be received from the cloud server as the first user encrypted symmetric key and decrypted using the first user private key.

The client UI module may be further configured to authorize a second user to view the first data by: sending a request to the cloud service to authorize a second user to view the first data, receiving a second user public key from the cloud server, encrypting the symmetric key using the second user public key to generate a second user encrypted symmetric key, and sending the second user encrypted symmetric key to the cloud service for storage in the cloud data storage.

The client UI module may be further configured to authorize a second user to view the first data by: sending a request to the cloud service to authorize a second user to view the first data, receiving the first user encrypted symmetric key and a second user public key from the cloud service, decrypting the first user encrypted symmetric key using the first user private key, encrypting the symmetric key using the second user public key to generate a second user encrypted symmetric key, and sending the second user encrypted symmetric key to the cloud service for storage in the cloud data storage.

The client UI module may be further configured to: in response to the user command, generate a second symmetric key; and determine whether to encrypt the sensitive forensic data with the symmetric key or the second symmetric key based on a classification group assigned to the sensitive data. The client UI module may be further configured to: encrypt the encrypted sensitive data using a second symmetric key based on a determination that the sensitive data is of a particular classification group. The first data may be transmitted between the client UI module and the cloud service as a stream of data, and wherein the encrypted sensitive data is embedded in the stream of data.

The client UI module may be further configured to pad the symmetric key according to a padding scheme prior to encrypting the symmetric key. The local storage on the client device may be persistent browser storage. The local storage on the client device may be credential storage as provided by an operating system of the client device.

The client device may include a browser session storage, and the client UI module may be further configured to use the browser session storage to cache the unencrypted sensitive data after decryption. The client UI module may be further configured to display a message notifying the user of the asymmetric keypair generation during or after generation of the asymmetric keypair.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a schematic diagram of a system for securing sensitive data in the cloud, according to an embodiment;
Figure 2 is a block diagram of a computing device of Figure 1, according to an embodiment;
Figure 3 is a block diagram of software components and organization of a cloud server, according to an embodiment;
Figure 4 is a block diagram of software components and organization of a client device, according to an embodiment;
Figure 5 is a block diagram of a client computer system for securing sensitive data in the cloud, according to an embodiment;
Figure 6 is a block diagram of a cloud server computer system for securing sensitive data in the cloud, according to an embodiment;
Figure 7 is a block diagram illustrating a system overview of a system for securing sensitive data in the cloud, according to an embodiment;
Figure 8 is a schematic diagram illustrating a communication and data flow of a new user login process for the system of Figure 7, according to an embodiment;
Figure 9 is a schematic diagram illustrating a communication and data flow of a process for uploading a new case for the system of Figure 7, according to an embodiment;
Figure 10 is a schematic diagram illustrating a communication and data flow of a process for adding authorized parties by a case owner for the system of Figure 7, according to an embodiment;
Figure 11 is a schematic diagram illustrating a communication and data flow of a process for adding authorized parties by an administrator for the system of Figure 7, according to an embodiment; and
Figure 12 is a schematic diagram illustrating a communication and data flow of a process for viewing a case for the system of Figure 7, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit, a mainframe computer, server, and personal computer, cloud-based program or system, laptop, personal data assistance, cellular telephone, smartphone, or tablet device.

Each program may be implemented in a high-level procedural or object-oriented programming and/or scripting language to communicate with a computer system. Each program may be implemented in a functional programming language. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to systems and methods for securing sensitive data in cloud-based applications, and more particularly to systems and methods for securing sensitive forensic data in cloud-based applications.

The present disclosure provides a system for securing sensitive data in the cloud. The system is configured to secure sensitive data, using encryption techniques, such that even if an unauthorized individual (hacker) gets access to a cloud server instance, the sensitive data remains inaccessible to the hacker through encryption. In an embodiment, the system uses asymmetric and symmetric key encryption techniques. The system leverages asymmetric (public/private) key pairs in a way that sensitive data gets encrypted on upload to the cloud server. The keys used to decrypt certain information (e.g. encrypted files, encrypted case key for decrypting the encrypted files) may be stored exclusively on the client device. The system may use a private key and a symmetric key (which may be a symmetric "case key"). The private key is generated and stored on the client device. The symmetric key is generated and stored on the client device. The symmetric key may be stored on the cloud server in encrypted form, where encryption of the symmetric key is performed on the client device prior to upload to the cloud server. The same symmetric key may be provided to a plurality of users who are authorized to view the sensitive data for that particular case ("authorized users"), which symmetric key can then be used (once decrypted on the client device using the authorized user's private key) by an authorized user to decrypt encrypted sensitive data received from the cloud server on the client device. In using this approach, in order to access the sensitive data, an individual would have to breach both the cloud server and the client device. Such a requirement for unauthorized access may drastically increase security and lower risk of breach. In other words, if the cloud server is breached, the sensitive data is still protected.

The systems and methods of the present disclosure may allow users, such as a law enforcement agency, to upload sensitive forensic data (e.g. child exploitation case) to a cloud server for investigators to review and analyze. The system may protect against such sensitive forensic data (e.g. CSA material) being accessed by bad actors who have hacked and gained access to the cloud instance containing the case and such forensic data (e.g. where the individual gaining access may, under normal circumstances, have full access to the data on the cloud server). The system may be designed such that, even in a scenario where an individual has gained unauthorized access to the cloud instance, the sensitive forensic data stored on the cloud server is safe (encrypted) and the infiltrator cannot access the sensitive forensic data (i.e. in unencrypted form). The systems and methods described herein may provide reassurance to cloud service users that sensitive forensic data uploaded to the cloud is not accessible to such infiltrators and cannot get into the hands of criminals.

The systems and methods of the present disclose include the encryption of sensitive data and files (e.g. images, video), which often comprise the most highly sensitive evidence within a case. The system may provide security controls which operate in addition to security controls already provided by a cloud service provider. Such cloud service provider security controls may be sufficient for protecting other forms of sensitive evidence, such as those contained within messages.

The systems and methods of the present disclosure may advantageously provide a dual layer of security for sensitive data stored in the cloud. The dual layer includes a first security layer provided by the internal security mechanisms of the cloud service provider (e.g. AWS, Microsoft Azure, etc.), such as encryption at rest. The second security layer of the dual layer encrypts sensitive data such that the sensitive data is only unencrypted on the client devices of users with authorization to view the sensitive data (i.e. the sensitive data is in encrypted format when in the cloud and in transit from the client device to the cloud (upload to cloud) or from the cloud to the viewing client device (for viewing of sensitive data)).

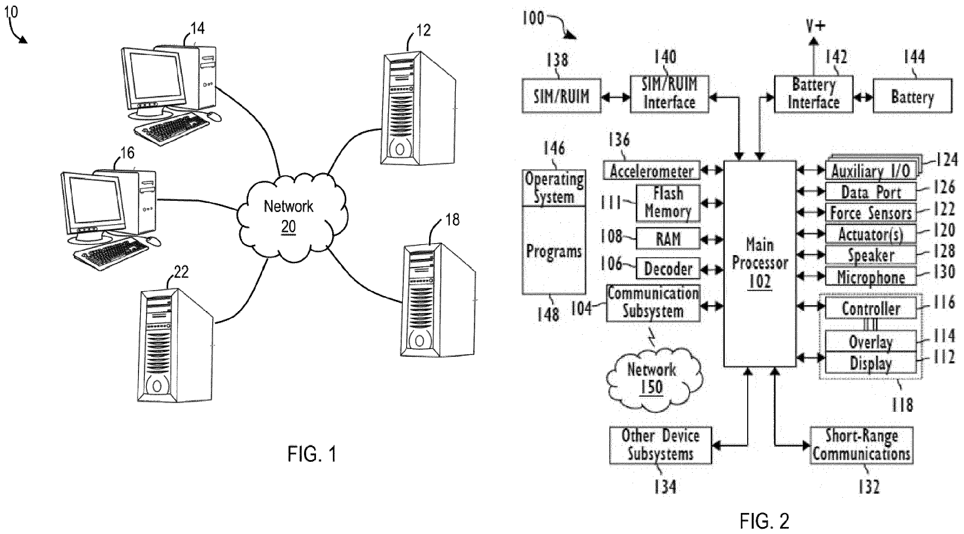

Referring now to Figure 1, shown therein is system 10 for securing sensitive data in the cloud, according to an embodiment. The system 10 includes a cloud server platform 12 which communicates with a plurality of user devices 14, a plurality of administrator devices 16, and a plurality of cloud storage devices 18 via a network 20. The user of the user device 14 may be a forensic investigator (or "investigator"). The server platform 12 also communicates with a digital forensics investigation platform 22. The devices 14, 16, 22 may act as client devices with respect to the server platform 12.

The server platform 12 may be a purpose-built machine designed specifically for securely uploading, storing, and viewing forensic data. The forensic data may relate to a particular investigation. The investigation may be a criminal investigation or may be a corporate or insider threat investigation (e.g. employee misconduct, IP theft, data exfiltration, root cause analysis, etc.). "Forensic data" as used herein refers to any data which may provide forensic or evidentiary value to a forensic investigation or investigator. Forensic data may include files, images, videos, audio, or the like. In some cases, the forensic data is sensitive data including sensitive material (e.g. CSA material). Access to such sensitive material should be tightly controlled. The system 10 may be designed such that the forensic data is never unsecured (e.g. unencrypted) on the cloud server 12 (or cloud storage device 18) and that unencrypted forensic data, and the keys used to decrypt, are only ever kept on a client device (e.g. user device, administrator device) with authorization to access to the case.

The sensitive forensic data may be associated with or otherwise linked to case data. Case data is data that is of interest to the user. Case data includes a collection of data related to a particular case or investigation and may be associated with a case reference or identifier. The case data is a digital representation of a case or investigation. The case data may include a case overview and identifier and other information in addition to forensic data, such as analytics and investigator notes.

In many cases, the sensitive forensic data may have been an "attachment" in its original context (i.e. when acquired via forensic collection). For example, in obtaining forensic data from a target device, such as through acquiring an image of a hard drive, the forensic data collection application produces "forensic hits". A forensic hit may include media external data. For example, a forensic hit of an email may include email metadata, content (the body of the email), and attachments (media external data). Such media external data may be referred to generally as an "attachment", as such media external data is often an attachment in the original context of the hard drive when it was scanned (e.g. file with an attachment).

Case data, as described herein, includes processed data and raw data (e.g. raw file data). The raw data includes the sensitive data that is encrypted by the system and stored in the cloud in encrypted format. The processed data includes data that is to be processed by the cloud server (cloud service), which is in contrast to the raw data which is not processed by the cloud service. Thus, the term "processed data" when referring to a component of case data includes that subset of data that is or may be processed by the cloud service. In some cases, processing to generate the processed data of the case data is performed by a client machine (e.g. user device 14), a machine on a client network, or a secondary "out of band" cloud service. Such processing produces the "case" (i.e. the digital representation of the case) from initial digital forensic evidence.

Case data may be transmitted between the client device and the cloud server 12 as a stream of data having encrypted sensitive data (forensic data, files) embedded therein. Access to case data may provide a user with access to encrypted forensic data which can be decrypted on the user device 14 according to techniques described herein.

The server platform 12 may enable collection and documenting of digital evidence in a single platform. Users may access forensic data uploaded to and stored by the server platform 12 using a web browser operating on the user device 14. For example, the server platform 12 may implement a web portal that can be accessed using a web browser operating on the user device 14 (or other client device).

The digital forensics platform 22 may be configured to acquire, analyze, and report on forensic data or digital evidence. The digital forensics platform 22 may be configured to collect forensic data (e.g. digital evidence) from a target device. The target device may be any computing device capable of storing data, such as a desktop computer, mobile computing device, cloud service, or loT device. The digital forensics platform 22 may configure and deploy an executable agent to the target device for collecting the forensic data. The executable agent may include search criteria according to which the agent searches the target device and collects data (e.g. the search criteria may define the parameters for the search, such as what type of files are being collected). The agent transmits collected forensic data from the target device to the digital forensics platform 22. The collected forensic data may be pulled into a single case file (case data).

Forensic data collected by the digital forensics platform 22 may be stored, viewed, and managed using the server platform 12. The digital forensics platform 22 may communicate with the server platform 12 via an interface, such as an application programming interface ("API") or the like. The interface facilitates communication of data between the digital forensics platform 22 and the server platform 12, and may enable a user of the digital forensics platform 22 to store, manage, and view forensic data (e.g. collected using the digital forensics platform 22) in the cloud. Forensic data may be imported to the cloud server 12 from the digital forensics platform 22 in an appropriate format.

The server platform 12, user devices 14, administrator devices 16, cloud storage devices 18, and digital forensics server 22 may be a server computer, desktop computer, notebook computer, tablet, PDA, smartphone, or another computing device. The devices 12, 14, 16, 18, 22 may include a connection with the network 20 such as a wired or wireless connection to the Internet. In some cases, the network 20 may include other types of computer or telecommunication networks. The devices 12, 14, 16, 18, 22 may include one or more of a memory, a secondary storage device, a processor, an input device, a display device, and an output device. Memory may include random access memory (RAM) or similar types of memory. Also, memory may store one or more applications for execution by processor. Applications may correspond with software modules comprising computer executable instructions to perform processing for the functions described below. Secondary storage device may include a hard disk drive, floppy disk drive, CD drive, DVD drive, Blu-ray drive, or other types of non-volatile data storage. Processor may execute applications, computer readable instructions or programs. The applications, computer readable instructions or programs may be stored in memory or in secondary storage or may be received from the Internet or other network 20. Input device may include any device for entering information into device 12, 14, 16, 18, 22. For example, input device may be a keyboard, keypad, cursor-control device, touchscreen, camera, or microphone. Display device may include any type of device for presenting visual information. For example, display device may be a computer monitor, a flat-screen display, a projector or a display panel. Output device may include any type of device for presenting a hard copy of information, such as a printer for example. Output device may also include other types of output devices such as speakers, for example. In some cases, device 12, 14, 16, 18, 22 may include multiple of any one or more of processors, applications, software modules, second storage devices, network connections, input devices, output devices, and display devices.

Each of the cloud server 12, cloud storage devices 18, and digital forensics server platform 22 may include one or more hardware-based servers or virtualized servers. The devices 12, 18, 22 may be configured to provide network-based applications and/or virtualization services. For example, the cloud server 12 may be a computing device configured to implement serverless computing or run a cloud function. Various types of hardware configurations for devices 12, 18, 22 are contemplated. The devices 12, 18, 22 may be implemented as part of a cloud-based computing solution, such as where the functionality of the device 12, 18, 22 is implemented as one or more virtual machines executing at one or more data centers. The devices 12, 18, 22 may be implemented as stand-alone devices or may be integrated as part of a multi-purpose server or implemented entirely in software, for example as one or more virtual machines. Accordingly, applications and computer programs, and components thereof, described herein may be implemented on hardware-based servers, virtualized systems, or some combination of hardware-based servers and virtualized systems. For example, in some cases portions of the applications or computer programs may be implemented via virtualized system and other portions implemented on hardware-based servers.

Although devices 12, 14, 16, 18, 22 are described with various components, one skilled in the art will appreciate that the devices 12, 14, 16, 18, 22 may in some cases contain fewer, additional or different components. In addition, although aspects of an implementation of the devices 12, 14, 16, 18, 22 may be described as being stored in memory, one skilled in the art will appreciate that these aspects can also be stored on or read from other types of computer program products or computer-readable media, such as secondary storage devices, including hard disks, floppy disks, CDs, or DVDs; a carrier wave from the Internet or other network; or other forms of RAM or ROM. The computer-readable media may include instructions for controlling the devices 12, 14, 16, 18, 22 and/or processor to perform a particular method.

In the description that follows, devices such as server platform 12, user devices 14, administrator devices 16, cloud storage devices 18, and digital forensics platform 22 are described performing certain acts. It will be appreciated that any one or more of these devices may perform an act automatically or in response to an interaction by a user of that device. That is, the user of the device may manipulate one or more input devices (e.g. a touchscreen, a mouse, or a button) causing the device to perform the described act. In many cases, this aspect may not be described below, but it will be understood.

As an example, it is described below that the devices 12, 14, 16, 18, 22 may send information to the server platform 12. For example, a forensic investigator user using the user device 14 may manipulate one or more input devices (e.g. a mouse and a keyboard) to interact with a user interface displayed on a display of the user device 14. Generally, the device may receive a user interface from the network 20 (e.g. in the form of a webpage). Alternatively, or in addition, a user interface may be stored locally at a device (e.g. a cache of a webpage or a mobile application).

Server platform 12 may be configured to receive a plurality of information, from each of the plurality of user devices 14, administrator devices 16, cloud storage devices 18, and digital forensics platform 22. Generally, the information may comprise at least an identifier identifying the user, administrator, client, or device. For example, the information may comprise one or more of a username, e-mail address, password, or social media handle.

In response to receiving information, the server platform 12 may store the information in storage database. The storage may correspond with secondary storage of the device 12, 14, 16, 18, 22. Generally, the storage database may be any suitable storage device such as a hard disk drive, a solid state drive, a memory card, or a disk (e.g. CD, DVD, or Blu-ray etc.). Also, the storage database may be locally connected with server platform 12. In some cases, storage database may be located remotely from server platform 12 and accessible to server platform 12 across a network for example. In some cases, storage database may comprise one or more storage devices located at a networked cloud storage provider (e.g. cloud storage device 18).

The user device 14 may be associated with a user account. Similarly, the administrator device 16 may be associated with an administrator account, the cloud storage device 18 may be associated with a cloud storage device account, and the digital forensics platform 22 may be associated with a digital forensics platform account. Any suitable mechanism for associating a device with an account is expressly contemplated. In some cases, a device may be associated with an account by sending credentials (e.g. a cookie, login, or password etc.) to the server platform 12. The server platform 12 may verify the credentials (e.g. determine that the received password matches a password associated with the account). If a device is associated with an account, the server platform 12 may consider further acts by that device to be associated with that account.

Referring now to Figure 2, shown therein is a block diagram of a computing device 100 of the system 10 of Figure 1, according to an embodiment. The computing device 100 may be, for example, any one of devices 12, 14, 16, 18, 22 of Figure 1.

The computing device 100 includes multiple components such as a processor 102 that controls the operations of the computing device 100. Communication functions, including data communications, voice communications, or both may be performed through a communication subsystem 104. Data received by the computing device 100 may be decompressed and decrypted by a decoder 106. The communication subsystem 104 may receive messages from and send messages to a wireless network 150. The wireless network 150 may be any type of wireless network, including, but not limited to, data-centric wireless networks, voice-centric wireless networks, and dual-mode networks that support both voice and data communications. The computing device 100 may be a battery-powered device and as shown includes a battery interface 142 for receiving one or more rechargeable batteries 144.

The processor 102 also interacts with additional subsystems such as a Random Access Memory (RAM) 108, a flash memory 110, a display 112 (e.g. with a touch-sensitive overlay 114 connected to an electronic controller 116 that together comprise a touch-sensitive display 118), an actuator assembly 120, one or more optional force sensors 122, an auxiliary input/output (I/O) subsystem 124, a data port 126, a speaker 128, a microphone 130, short-range communications systems 1320 and other device subsystems 134.

In some embodiments, user-interaction with the graphical user interface may be performed through the touch-sensitive overlay 114. The processor 102 may interact with the touch-sensitive overlay 114 via the electronic controller 116. Information, such as text, characters, symbols, images, icons, and other items that may be displayed or rendered on a computing device generated by the processor 102 may be displayed on the touch-sensitive display 118.

The processor 102 may also interact with an accelerometer 136 as shown in Figure 1. The accelerometer 136 may be utilized for detecting direction of gravitational forces or gravity-induced reaction forces.

To identify a subscriber for network access according to the present embodiment, the computing device 100 may use a Subscriber Identity Module or a Removable User Identity Module (SIM/RUIM) card 138 inserted into a SIM/RUIM interface 140 for communication with a network (such as the wireless network 150). Alternatively, user identification information may be programmed into the flash memory 110 or performed using other techniques.

The computing device 100 also includes an operating system 146 and software components 148 that are executed by the processor 102 and which may be stored in a persistent data storage device such as the flash memory 110. Additional applications may be loaded onto the computing device 100 through the wireless network 150, the auxiliary I/O subsystem 124, the data port 126, the short-range communications subsystem 132, or any other suitable device subsystem 134.

In use, a received signal such as a text message, an e-mail message, web page download, or other data may be processed by the communication subsystem 104 and input to the processor 102. The processor 102 then processes the received signal for output to the display 112 or alternatively to the auxiliary I/O subsystem 124. A subscriber may also compose data items, such as e-mail messages, for example, which may be transmitted over the wireless network 150 through the communication subsystem 104.

For voice communications, the overall operation of the computing device 100 may be similar. The speaker 128 may output audible information converted from electrical signals, and the microphone 130 may convert audible information into electrical signals for processing.

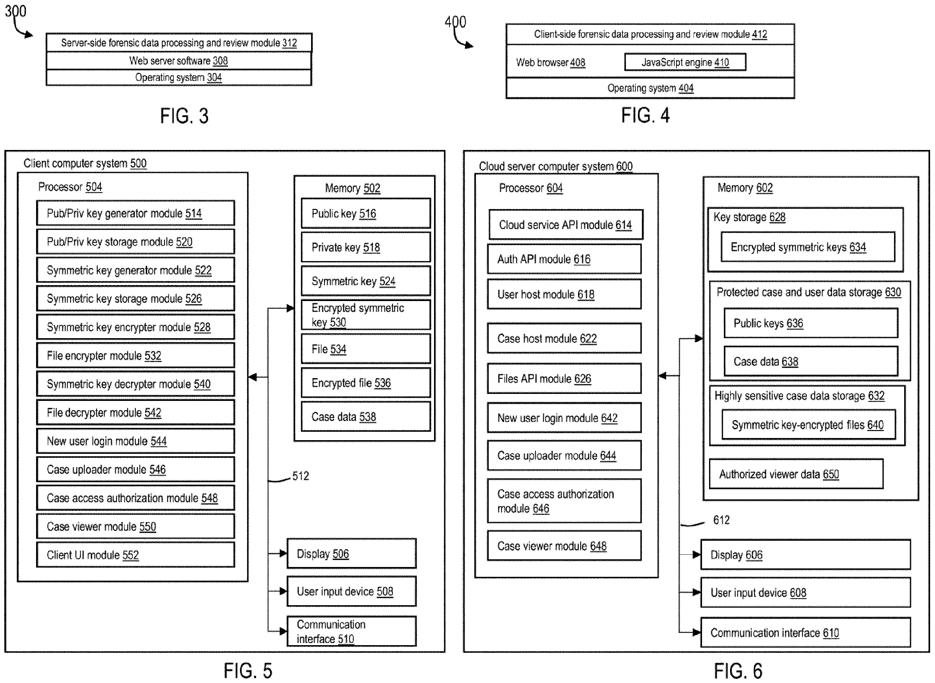

Referring now to Figure 3, shown therein is a simplified organization of example software components 300 stored within memory of a cloud server, according to an embodiment. The cloud server may be the cloud server 12 of Figure 1. The software components 300, when executed, adapt the server 12 to operate according to embodiments described herein.

As illustrated, the software components 300 include an operating system 304, web server software 308, and a server-side forensic data review module 312.

Operating system (OS) software 304 may, for example, be Microsoft Windows, Linux, Macintosh OSX, UNIX, or the like. OS software 304 allows web server software 308 to access one or more processors, network interface, persistent storage, memory, and one or more I/O interfaces of the cloud server 12. OS software 304 includes a networking stack such as, for example a TCP/IP stack, allowing the cloud server 12 to communicate with client computing devices 14 through a network interface using a protocol such as TCP/IP. The client computing devices may be end-user devices such as user device 14 or administrator devices 16 of Figure 1. Web server software 308 may, for example, be Apache, Microsoft Internet Information Services (IIS), or the like.

The server-side forensic data review module 312 includes software components including instructions used in uploading, storing, processing, reviewing, and managing forensic data that execute on one or more processors of the cloud server 12. The server-side forensic data review module 312 may store forensic data (e.g. files, images, videos, audio, etc.) in secondary storage, including sensitive data, and control and manage access thereto, including sharing access to stored forensic data. In doing so, the server-side forensic data review module 312 may enable collaboration among investigators (users) with access to the forensic data stored in the cloud. The server-side forensic data review module 312 further includes software components configured to secure data uploaded to the cloud server 12, through the application of encryption and other techniques. As will become apparent, the server-side forensic data review module 312 when executed, may co-operate with corresponding client-side components (i.e. executing on one or more processors of a client computing device, such as devices 14, 16 of Figure 1) to allow a client device to securely upload, store, and view forensic data and to receive user input for same.

Referring now to Figure 4, shown therein is a simplified organization of example software components 400 stored within memory of a client computing device of the system 10 of Figure 1, according to an embodiment. The client computing device may be, for example, the user device 14 or the administrator device 16 of Figure 1.

As illustrated, the software components 400 include operating system 404, web browser 408, and a client-side forensic data review module 412. OS software 404 may be, for example, Microsoft Windows, iOS, Android, or the like. OS software 404 allows web browser 408 to access one or more processors, network interface, persistent storage, memory, and one or more I/O interfaces of the client computing device. Web browser 408 may be, for example, Google Chrome, Chromium, Mozilla Firefox, Apple Safari, Microsoft Internet Explorer, Microsoft Edge or the like. Web browser 408 enables the client computing device to retrieve and render web pages such as may be accessed using a network interface of the client computing device. Web browser 408 may include a JavaScript engine 410 which is responsible for executing JavaScript code such as may be retrieved by or included in one of more of the aforementioned web pages. For example, JavaScript engine 410 may execute JavaScript code in a web page and/or one or more JavaScript code libraries referenced therein.

The client-side forensic data review module 412 includes software components including instructions used in uploading, storing, processing, reviewing, and managing forensic data that execute on one or more processors of the client computing device. In some embodiments, the client-side forensic data review module 412 may comprise JavaScript code that is executed by the JavaScript engine 410. The client-side forensic data review module 412, when executed, may co-operate with the server-side forensic data review module 312 executing on the cloud server 12 to allow the client device to securely upload, store, and view forensic data and receive user input for doing same.

Referring now to Figure 5, shown therein is a client computer system 500, according to an embodiment. The computer system 500 may be implemented at the user device 14 or the administrator device 16 of Figure 1. In a particular case, the computer system 500 may be implemented on a server configured for processing and/or analytics of forensic data (e.g. platform 22 of Figure 1) that acts as a client with respect to the cloud server (e.g. cloud server 12 of Figure 1). The computer system 500 includes various software components and modules which may be implemented as part of client-side forensic data review module 412 of Figure 4. The client computer system 500 is configured to cooperate with a server computer system, such as cloud server computer system 600 of Figure 6, to provide a system for securing sensitive data in the cloud as described herein.

The system 500 includes a memory 502 in communication with a processor 504. The memory 502 may be stored at any one or more of a user device (e.g. user device 14 of Figure 1) or administrator device (e.g. administrator device 16 of Figure 1). The memory 502 is a local memory stored on the client device. The processor 504 may be located at any one or more of a user device or an administrator device.

The system 500 also includes a display 506, a user input device 508, and a communication or network interface 510. The memory 502, display 506, user input device 508, and communication device 510 are in communication with the processor 504 via a communication bus 512. The display 506 is configured to display various data generated by the system to a user via one or more graphical user interfaces implemented by the processor 504. The user input device 508 is configured to receive user input and generate user input data therefrom that can be processed by the processor 504. The user input device 508 may include a touchscreen display or the like. The user input device 508 facilitates user interaction with the one or more graphical user interfaces outputted at the display 508. The communication interface 510 facilitates the transfer of data between the system 500 and an external device, such as the cloud server 12. The communication interface 510 may be configured to transmit and receive data via wired or wireless network connection.

The processor 504 includes a public/private (or asymmetric) key generator module 514. The public/private key generator module 514 is configured to generate a public/private key pair including a public key 516 and a private key 518. The key generator module 514 may be invoked automatically upon a system user's first login to the system. In other cases, the key generator module 514 may be invoked upon receiving user input data requesting generation of a new key pair (e.g. clicking on an user interface icon displayed in a user settings page). The public/private key generator module 514 may use client-side JavaScript (e.g. Web Crypto API).

The processor 504 includes a public/private key storage module 520. The public/private key storage module 520 is configured to store the public key 516 and the private key 518 in memory 502 upon generation of the keys 516, 518. The key storage module 520 may be configured to store the private key 516 in persistent storage or credential storage (as provided by the client device's operating system). The public key 516 may also be transmitted by the client device to a cloud server for storage.

The processor 504 includes a case (or symmetric) key generator module 522. The symmetric key generator module 522 randomly generates a symmetric key 524. The symmetric key generator module 522 may use advanced encryption standard ("AES") encryption.

The processor includes a symmetric key storage module 526. The symmetric key storage module 526 stores the symmetric key 524 in the memory 502 upon generation of the symmetric key 524. The symmetric key storage module 526 may store the symmetric key 524 in volatile storage. For example, the symmetric key storage module 526 may cache the symmetric key 524 in session storage. The symmetric key 524 may be stored such that the data is not persistent (e.g. is lost/erased once the session, browser window or tab is closed).

The processor 504 includes a symmetric key encrypter module 528. The symmetric key encrypter module 528 is configured to retrieve the public key 516 and the symmetric key 524 from the memory 502 and encrypt the symmetric key 524 using the public key 516 to generate an encrypted symmetric key 530. The encrypted symmetric key 530 is stored in memory 502. The encrypted symmetric key 530 may be sent to the cloud server for storage.

The symmetric key encrypter module 528 may be further configured to pad the symmetric key 524 prior to encryption. In other variations, the padding function may be performed by a separate module configured to pad the symmetric key 524. Padding may be performed using a padding scheme such as optical asymmetric encryption padding or the like. Padding the symmetric key 524 may secure the symmetric key 524 against brute force attacks.

The processor 504 includes a file encrypter module 532. The file encrypter module 532 is configured receive a file 534 (stored in memory 502) as input and encrypt the file 534 using the symmetric key 524 to generate an encrypted file 536. The file 534 comprises forensic data. The file 534 may be, for example, an image file or a video file. The encrypted file 536 is stored in memory 502. The encrypted file 536 is transmitted to the cloud server. The encrypted file 536 may be transmitted to the cloud server with case data 538 upon upload of the case data 538. For example, the case data 538 may be transmitted to the cloud server as a stream of data with the encrypted file 536 (data thereof) embedded in the stream of data.

The modules 522, 526, 528, and 532 may be automatically invoked upon a user trying to upload the encrypted file 536 or the case data 538 (in which the encrypted file data 536 may be embedded) to the cloud server.

The processor 504 includes a symmetric key decrypter module 540. The symmetric key decrypter module 540 is configured to decrypt the encrypted symmetric key 530 using the private key 518 (corresponding to the public key 516 used to generate the encrypted symmetric key) to get the symmetric key 524. The symmetric key decrypter module 540 may be invoked upon receiving an encrypted symmetric key from the cloud server.

The processor includes a file decrypter module 542. The file decrypter module 542 is configured to decrypt the encrypted file 536 to obtain the file 534 (in unencrypted form). The file decrypter module 542 may be invoked upon receiving an encrypted file from the cloud server. The processor 504 also includes a new user login module 544, a case uploader module 546, a case access authorization module 548, a case viewer module 550 and a client UI module 552.

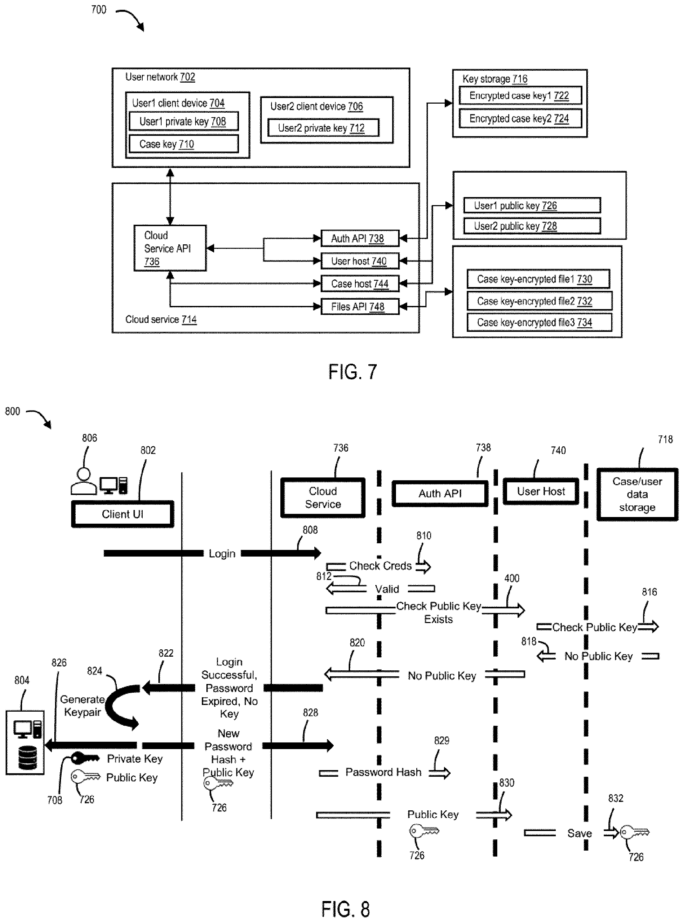

The new user login module 544 is configured to execute a new user login process, such as the process described in Figure 8. The new user login module 544 is configured to initiate public/private keypair generation and storage upon a user's first login to the system. The new user login module 544 may invoke the public/private key generator module 514 and the public/private key storage module 520. The new user login module 544 is configured to send the public key 516 to the cloud server.

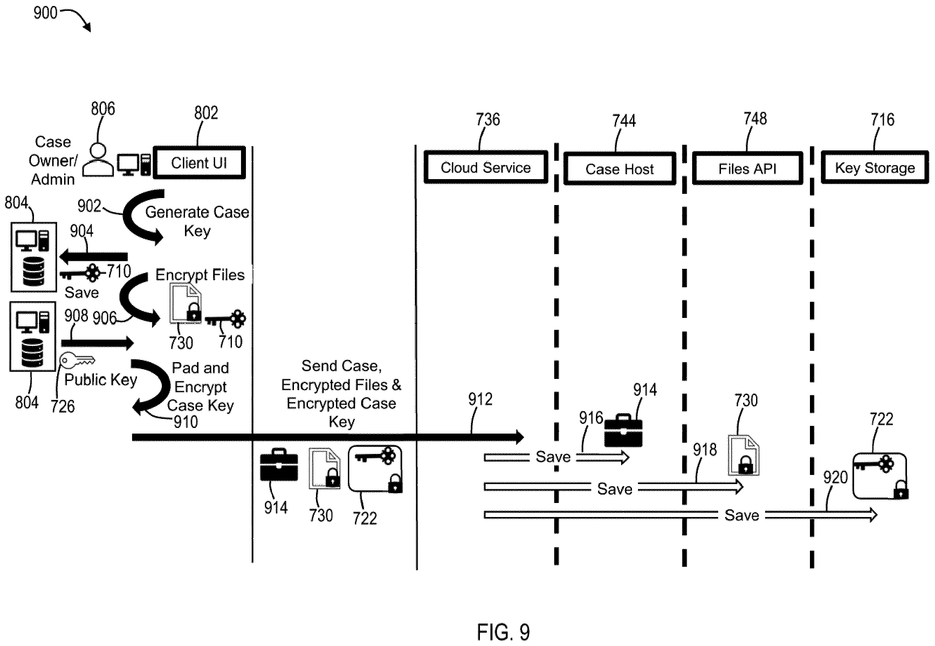

The case uploader module 546 is configured to execute a case upload process, such as the process described in Figure 9. The case uploader module 546 is configured to initiate encryption of the symmetric key 524 and encrypting of the file 534. The case uploader module 546 is used to upload the case data 538 and the encrypted file 536 to the cloud server. The case uploader module 546 may invoke the symmetric key generator module 522, the symmetric key storage module 526, the symmetric key encrypter module 528, and the file encrypter module 532.

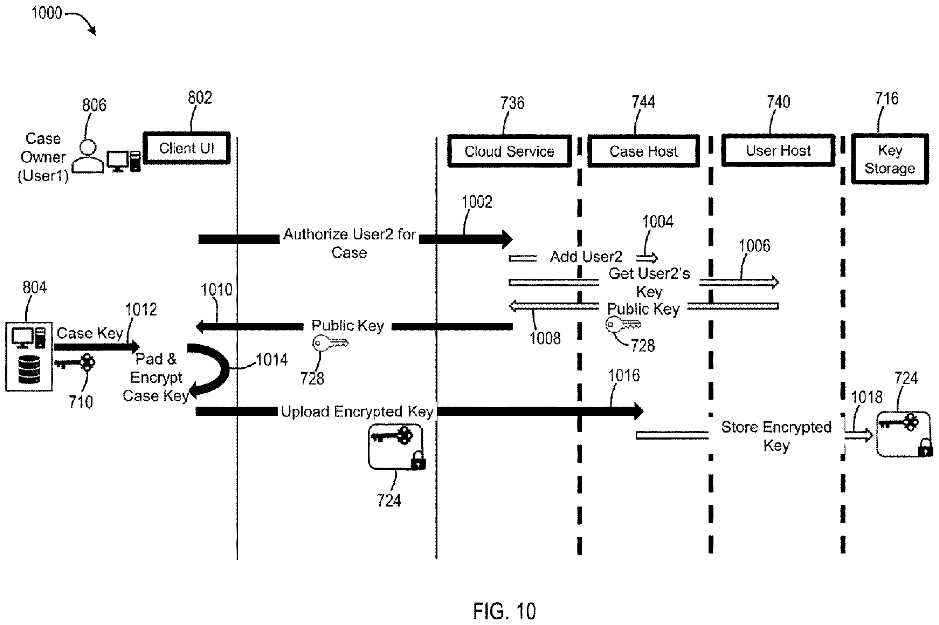

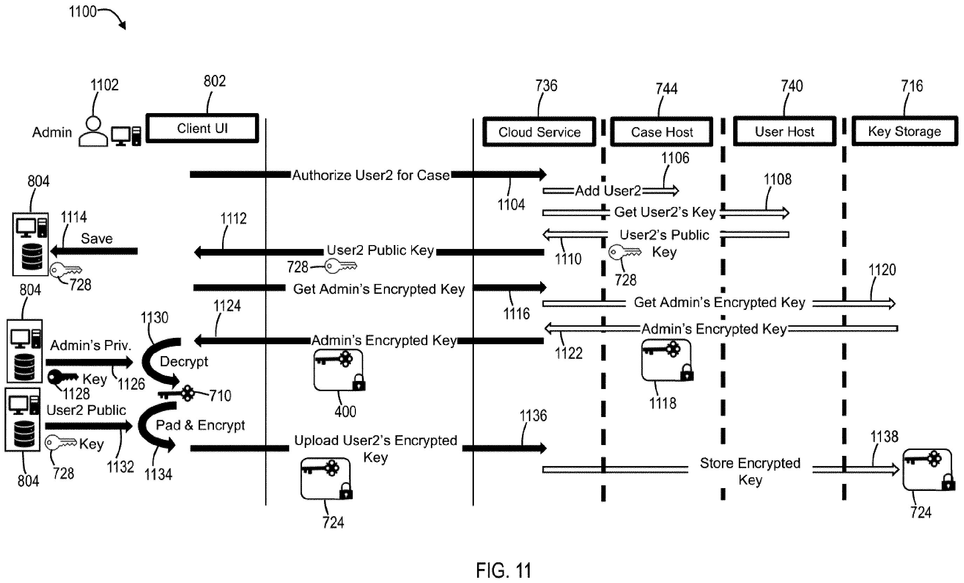

The case access authorization module 548 is configured to execute a case access authorization process, such as the processes described in Figure 10 and 11. The case access authorization module 548 is configured to provide authorization to another user to access the case data 538 (and the file 534). The case access authorization module 548 may invoke the symmetric key encrypter module 528 to generate an encrypted symmetric key for the newly authorized user. The case access authorization module 548 may invoke the symmetric key decrypter module 540 (e.g. in the case of an administrator, decrypt the administrator's encrypted symmetric key) to get the symmetric key 524 in order to generate an encrypted symmetric key for the newly authorized user. The case access authorization module 548 may then send the encrypted symmetric key for the newly authorized user to the cloud server.

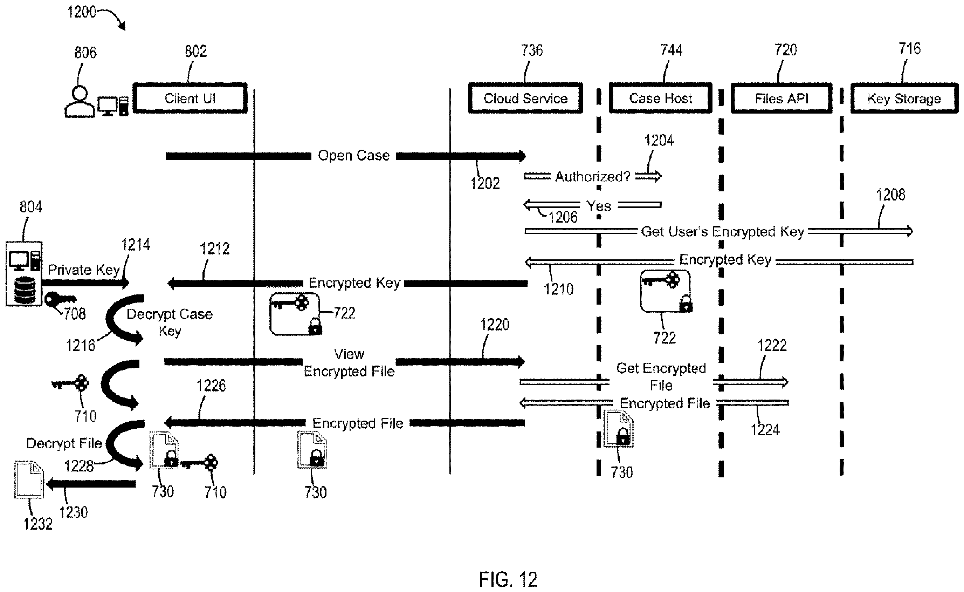

The case viewer module 550 is configured to execute a case viewing process, such as the process described in Figure 12. The case viewer module 550 is configured to receive the encrypted symmetric key 530 from the cloud server, decrypt the encrypted symmetric key 530 using the private key 518 to get the symmetric key 524, receive the encrypted file 536 from the cloud server, and decrypt the encrypted file 536 using the symmetric key 524 to view the unencrypted file 534. The case viewer module 550 may invoke the symmetric key decrypter module 540 and the file decrypter module 542.

The client UI module 552 is configured to generate and display various user interfaces for displaying data (such as case data 538 and file 534) and receiving user input (which user input may invoke execution of certain modules).

Referring now to Figure 6, shown therein is a cloud server computer system 600, according to an embodiment. The computer system 600 may be the cloud server 12 of Figure 1. The computer system 600 includes various software components and modules which may be implemented as part of server-side forensic data review module 312 of Figure 3. The cloud server computer system 600 is configured to cooperate with a client computer system, such as client computer system 500 of Figure 5, to provide a system for securing sensitive data in the cloud as described herein.

The system 600 includes a memory 602 in communication with a processor 604. The memory 602 may be stored at any one or more of a cloud server (e.g. cloud server 12 of Figure 1) or a cloud storage device (e.g. cloud storage device 18 of Figure 1). The processor 604 may be located at any one or more of a cloud server (e.g. cloud server 12 of Figure 1) or a cloud storage device (e.g. cloud storage device 18 of Figure 1).

The system 600 also includes a display 606, a user input device 608, and a communication interface 610. The memory 602, display 606, user input device 608, and communication device 610 are in communication with the processor 604 via communication bus 612. The display 606 is configured to display various data generated by the system to a user via one or more graphical user interfaces implemented by the processor 604. The user input device 608 is configured to receive user input and generate user input data therefrom that can be processed by the processor 604. The user input device 608 may include a touchscreen display or the like. The user input device 608 facilitates user interaction with the one or more graphical user interfaces outputted at the display 608.

The communication interface 610 facilitates the transfer of data between the system 600 and an external device, such as a client device. The client device may be, for example, the user device 14 or the administrator device 16 of Figure 1. The communication interface 610 may be configured to transmit and receive data via wired or wireless network connection.

The processor 604 includes a cloud service API module 614. The cloud service API module 614 is configured to send data to the client device (e.g. a client UI executing on the client device) and receive data from the client device. The processor 604 also includes an auth API module 616, a user host module 618, a case host module 622, and a files API module 626. The modules 616, 618, 622, 626 each send data to and receive data from the cloud service API module 614.

The memory 602 includes a highly-sensitive case data storage 628, a protected case and user data storage 630, and a highly-sensitive case data storage 632. The highly-sensitive case data storage 628 stores encrypted symmetric keys 634, such as encrypted symmetric key 530 of Figure 5.

The file API module 626 transfers data to and receives data from the highly-sensitive case data storage 628.

The protected case and user data storage 630 stores public keys 636 (such as public key 516 of Figure 5) and case data 638 (such as case data 538 of Figure 5). Each public key 636 may be linked to a user account.

The auth API module 616, user host module 618, and case host module 622transfer data to and receive data from the protected case and user data storage 630.

The highly sensitive case data storage 632 stores encrypted files 640 (such as encrypted file 536 of Figure 5). The encrypted files 640 have been encrypted using a symmetric key, such as symmetric key 524 of Figure 5.

The files API module 626 transfers data to and receives data from the highly sensitive case data storage 632.

The processor 604 also includes a new user login module 642, a case uploader module 644, a case access authorization module 646, and a case viewer module 648.

The new user login module 642 implements cloud-side operations for a new user login process, such as the process described in Figure 8. The new user login module 642 may store public keys 636 alongside user accounts for the respective key owners.

The case uploader module 644 implements cloud-side operations for a case upload process, such as the process described in Figure 9.

The case access authorization module 646 implements cloud-side operations for a case access authorization process, such as the processes described in Figures 10 and 11. The case access authorization module 646 may generate authorized viewer data 650, which is stored in memory 602. The authorized viewer data 650 may include a list of authorized viewers for a case.

The case viewer module 648 implements cloud-side operations for a case viewing process, such as the process described in Figure 12.

Referring now to Figure 7, shown therein is a system overview of a system 700 for securing sensitive data in the cloud, according to an embodiment. The system 700 may be the system 10 of Figure 1. The system 700 includes a user network 702. The user network 702 includes a plurality of client devices including a User1 client device 704 associated with a first user (User1) and a User2 client device 706 associated with a second user (i.e. user2). The user devices 704, 706 may be a user device 14 or an administrator device 16 of Figure 1, or another client device. The user devices 704, 706 may each implement the computer system 500 of Figure 5.

The user1 device 704 includes a local storage storing a private key 708 of the first user (user1 private key) and a case key 710. The case key 710 is a symmetric key (e.g. symmetric key 524 of Figure 5). The case key 710 can be used by authorized users to encrypt and decrypt sensitive data on a client device.

The user2 device 706 includes a local storage storing a private key 712 of the second user (user2 private key).

The client devices 704, 706 in the user network 702 communicate with a cloud service 714. The cloud service 714 is implemented on one or more cloud servers, such as the cloud server 12 of Figure 1. The cloud service 714 is configured to enable uploading, storing, managing, and viewing forensic data, including sensitive data, in a secure manner. The cloud service 714 may include server-side forensic data processing and review module 312 of Figure 3.

The system 700 includes a key storage 716, a protected case and user data storage 718, and a highly-sensitive case data storage 720 (or "file storage"). The key storage 716, protected case and user data storage 718, and the highly-sensitive case data storage 720 are each in communication with the cloud service 714. The key storage 716, protected case and user data storage 718, and the highly-sensitive case data storage 720 may be stored on one or more cloud storage devices, such as cloud server 12 or cloud storage device 18 of Figure 1.

The key storage 716 stores a plurality of encrypted case keys. In the example of Figure 7, this includes a first encrypted case key 722 (encrypted case key1) and a second encrypted case key 724 (encrypted case key2). The encrypted case keys generally correspond to a case key (e.g. case key 710) that is encrypted using a particular user's public key (e.g. public keys 726, 728, described below). The encrypted case key can be decrypted using only the private key (e.g. private keys 708, 712) corresponding to the public key used to generate the encrypted case key.

The protected case and user data storage 718 stores a plurality of public keys. In the example of Figure 7, this includes a first public key 726 associated with the first user (user1 public key) and a second public key 728 associated with the second user (user 2 public key). The public keys 726, 728 are generated on the client devices 704, 706, respectively, as part of a public/private keypair and corresponding with private key 708 and private key 712, respectively.

The highly sensitive case data storage 720 stores a plurality of encrypted files (forensic data). The files may include images, video, etc. The files have been encrypted using a case key, such as case key 710. In the example of Figure 7, the encrypted files include a first encrypted file 730 (case-key encrypted file1), a second encrypted file 732 (case key-encrypted file2), and a third encrypted file 734 (case key-encrypted file3).

The cloud service 714 includes a cloud service API module 736. The cloud service API module 736 communicates with a client-side software component executing on the user devices 704, 706, including sending data to and receiving data from the client-side software component. The client-side software component may include a web-based user interface. The client-side software component may include a web browser and the review-front end 736 may comprise a web server. The client-side software component and cloud service API 736 may together implement a web portal for uploading, storing, managing, and reviewing forensic data.

The cloud service 714 also includes a plurality of software components with which the cloud service API 736 communicates, including an auth API component 738, a user host component 740, a case host component 744, and a files API component 748.

The cloud service API 736 communicates with the key storage 716 using the auth API 738. The cloud service API 736 communicates with the case/user data 718 using the user host component 740, and the case host component 744. The cloud service API 736 communicates with the highly sensitive case data storage 720 using the files API component 748.

Referring now to Figures 8 to 12, shown therein are method flows for various operations performed by the system 700 of Figure 7. Such method flows may also be implemented by the system 10 of Figure 1 or the computer systems 500 and 600 of Figures 5 and 6. In some embodiments, any one or more of the methods of Figures 8 to 12 may be performed automatically by the system (i.e. by client and/or cloud components) and without the need for user input. Such methods may be initiated by a user interaction with a client-side application (e.g. client UI 802) on the client device that is configured to communicate with a cloud service, such as providing user input data via one or more user interface elements displayed in a user interface on the client device. In such cases, the methods may be initiated by the client-side application in response to receiving the user input data. For example, the client-side application may be configured to display certain case data (such as when the user is browsing various evidence items in the case data using the client Ul) and in doing so may recognize the presence of a file reference for an encrypted file. The client-side application may be configured to recognize or identify such a file reference and automatically generate and send a request to the cloud service to retrieve the user's encrypted case key. The encrypted case key may then be sent to the client-side application, which is configured to decrypt the received encrypted file and display the decrypted file. This sequence of operations may be performed automatically by the system (i.e. client-side application and/or cloud service). Other operations may be performed automatically in a similar fashion, advantageously carrying out the security features of the system with minimal or no input required from the user.

Further, certain aspects of Figures 8 to 12 describe padding of a case key prior to encrypting the case key by the client-side application. While not described, it is to be understood the client-side application is also configured to remove padding from the case key after decrypting an encrypted case key.

Referring now to Figure 8, shown therein is a method flow 800 of a new user login process for the system of Figure 7, according to an embodiment. For the method 800, it can be assumed a user account has already been created by IT or an administrator user (Admin user) with a username created according to policy and a one-time password set.

The method flow 800 may be encoded as computer-executable instructions executed by one or more processors located at the client device and the cloud server. For example, the method flow 800 may be implemented as part of client-side new user login module 544 executing on a user device and server-side new user login module 642 executing on a cloud server.

The method flow 800 includes a client device (e.g. user1 device 704) and a plurality of cloud components. The client device 704 includes a client UI component 802 and a client device local storage component 804. The client local storage may be persistent browser storage or credential storage (as provided by the OS). The client UI component 802 comprises client-side code including a graphical user interface. While description of the client UI 806 may refer to JavaScript implementations, in other embodiments the client UI 806 may use another programming language or take another form (e.g. desktop or mobile application, WebAssembly, TypeScript, etc.). The client device is associated with a first user 806.

The cloud components include the cloud service API 736, the auth API component 738, the user host component 740, and the protected case and user data storage 718.

In some embodiments, the method 800, after being initiated upon the user 806 providing a user input to the client UI 802 indicating a login request, is performed automatically and without the need for user input. At 808, the first user 806 initiates a login operation via the client UI 802. The client UI 802 sends a login request to the cloud service API 736. At 810, the cloud service API 736 sends a request to the auth API 738 to check credentials of the user 806.

At 812, the auth API 738 returns a message to the cloud service 736 indicating the credentials are valid, but expired, and need to be updated. At 814, the cloud service API 736 sends a message to the user host component 740 to check whether a public key exists for the requesting first user 806. At 816, upon receiving the request to check whether a public key exists from the cloud service, the user host component 740 communicates with the protected case and user data storage 718 to check whether the first user 806 has a public key (e.g. public key 726 of Figure 7) in the system. At 818, a message is returned to the user host 740 indicating that no public key was found in the protected case and user data storage 718 for the first user 806.

At 820, the user host component 740 sends a message to the cloud service API 736 indicating no public key exists for the requesting first user 806. At 822, the cloud service API 736 sends a message to the client UI 802. The message may indicate that the login was successful, the password is expired, and that no key was found in the system for the first user 806.

At 824, upon receiving a message from the cloud service API 736 indicating no public key exists, the client UI 802 initiates generation of a public/private keypair on the client device 704. The keypair generation operation generates a public key 726 for the first user (User1 public key) and a private key 708 for the first user (User1 private key). The keypair generation may be performed using client-side JavaScript e.g. Web Crypto API. The keypair generation is performed automatically by the client UI 802 upon receiving the message from the cloud service 736 indicating no public key exists for the user 806. The automatic generation of the keypair may be performed by the client UI 802 without the need for user input provided to the client UI 802 at the client device.

At 826, the private and public keys 708, 726 are stored in the client local storage 804. The private key 708 is stored on the client, either in persistent browser storage, or credential storage as provided by the OS. At 828, the public key 726 is also sent from the client UI 802 to the cloud service API 736. A new password hash is also sent to the cloud service 736.

At 829, the cloud service 736 provides the password hash to the auth API 738. The authentication mechanism implemented at 828 and 829 is one example of how an authentication process may be performed by the system. Other forms of secure authentication according to best practices in the area of authentication may be used.

At 830, the public key 726 is sent from the cloud service API 736 to the user host component 740. At 832, the public key 726 is sent to and stored in the protected case and user data storage 718. The public key 726 may be linked to a particular user (i.e. user 806) via a unique user identifier such that the public key 726 is retrievable from the protected case and user data storage 718 using the user identifier.

Referring now to Figure 9, shown therein is a method flow 900 of a process for uploading a new case for the system of Figure 7, according to an embodiment. The method flow 900 may be performed after the method flow 800 of Figure 8.

The method flow 900 may be encoded as computer-executable instructions executed by one or more processors located at the client device and the cloud server. For example, the method flow 900 may be implemented as part of client-side case uploader module 546 executing on a user device and server-side case uploader module 644 executing on a cloud server.

The method flow 900 includes a client device (e.g. user1 device 704) and a plurality of cloud components. The client device 704 includes the client UI component 802 and the client device local storage component 804. The client device is associated with the first user 806.

The cloud components include the cloud service API 736, the case host component 744, the highly-sensitive case data storage 720, and the key storage 716.

In some embodiments, the method 900, after being initiated upon the user 806 providing a user input to the client UI 802 indicating a case upload request (e.g. selecting a user interface element to upload the case), is performed automatically and without the need for user input.

At 902, the client UI 802 generates a case key (e.g. case key 710 of Figure 7). The case key 710 may be generated automatically by the client device 704 in response to the client UI receiving input data indicating an intention of the user 806 to upload a case (case data) to the cloud service 714. For example, the user may complete one or more operations, such as clicking on an icon in a user interface, which may initiate the process at 902. The user associated with the client device may be a user or an administrator. In the case of a user, the user may be considered the case owner. The case to be uploaded may include various information about a case or investigation and one or more files (forensic data).

At 904, the case key 710 is stored in client local storage 804. The case key 710 may be stored in volatile storage, such as session storage.

At 906, a file on the client device, and which is associated or linked to the case being uploaded to the cloud service 714, is encrypted using the case key 710 to generate an encrypted file (e.g. case key-encrypted file1 730). For example, the case data may be provided to the cloud service API 736 as a stream of data in which the encrypted files are embedded. At 908, the public key 726 of the first user 806 is retrieved from the client local storage 804.

At 910, the case key 710 is padded using a padding scheme (e.g. optical asymmetric encryption padding or "OAEP"). The (padded) case key 710 is encrypted using the public key 726 (of the uploader) to generate an encrypted case key (e.g. encrypted case key1 722). Padding and encrypting of the case key 710 may be performed once the upload of the case to the cloud service 736 is complete. The encrypted case key 722 may be saved alongside the case.

At 912, case data 914, the encrypted file 730, and the encrypted case key 722 are sent from client UI 802 to the cloud service API 736. The case data 914 is transmitted between the cloud service and the client UI 802 as a stream of data, where the encrypted sensitive forensic data (encrypted file 730) is embedded in the stream of data.

At 916, the cloud service API saves the case data by sending the case data to the case host 744.

At 918, the review front end 736 saves the encrypted file by sending the encrypted file 730 to the files API 748. The files API 748 stores the encrypted file 730 in the highly sensitive case data storage 720.

At 920, the cloud service API 736 saves the encrypted case key 722 by sending the encrypted case key 722 to the key storage 716.

Referring now to Figure 10, shown therein is a method flow 1000 of a process for adding authorized parties by a case owner for the system of Figure 7, according to an embodiment. In this particular case, user1 is authorizing a second user, user2, to access a case.

The method flow 1000 may be encoded as computer-executable instructions executed by one or more processors located at the client device and the cloud server. For example, the method flow 1000 may be implemented as part of client-side case access authorization module 548 executing on a user device and server-side case access authorization module 646 executing on a cloud server.

The method flow 1000 includes a client device (e.g. user1 device 704) and a plurality of cloud components. The client device 704 includes the client UI component 802 and the client device local storage component 804. The client device is associated with the first user 806. The cloud components include the cloud service API 736, the case host component 744, the user host component 740, and the key storage 716. In some embodiments, the method 1000, after being initiated upon the user 806 providing a user input to the client UI 802 indicating a request to authorize a user (e.g. inputting or selecting a user to authorize), is performed automatically and without the need for user input.

At 1002, a message is sent from the client UI802 to the cloud service API 736 authorizing a second user (user2) to access the case 914 (newly authorized user). The operation at 1002 may be initiated by receipt of user input data by the client UI 802 indicating an intention of user1 806 to authorize user2 to access the case 914. The input data may include a user identifier that can be used to identify the user in the system. At 1004, the cloud service API 736 sends a message to the case host component 744 to add user2 to the case as an authorized user. At 1006, the cloud service API 736 sends a request to the user host component 740 to get the public key of user2.

At 1008, the user host component 744 sends the public key 728 of user2 to the cloud service API 736. The public key 728 may have been generated using the method 800 of Figure 8 upon first login to the system by user2. At 1010, the cloud service API 736 sends the public key 728 of user2 to the client UI 802. At 1012, the client UI 802 retrieves the case key 710 for the case for which authorization is being given from client local storage 804. The client local storage 804 may be volatile storage, such as browser session storage. At 1014, the client UI 802 pads the case key 710 (e.g. using OAEP or other padding scheme) and encrypts the case key 710 using the public key 728 of user2 to generate an encrypted case key 724. At 1016, the (padded) encrypted case key 724 is uploaded from the client UI 802 to the case host component 744. At 1018, the case host component 744 stores the encrypted case key 724 in the key storage 716.

Referring now to Figure 11, shown therein is a method flow 1100 of a process for adding authorized parties by an administrator for the system of Figure 7, according to an embodiment. In this particular case, an administrator 1102 is authorizing a second user, user2, to access a case (e.g. where the case owner in the system is user1). For this example, the case is case 914 uploaded using the method 900 of Figure 9.

The method flow 1100 may be encoded as computer-executable instructions executed by one or more processors located at the client device and the cloud server. For example, the method flow 1100 may be implemented as part of client-side case access authorization module 548 executing on a user device and server-side case access authorization module 646 executing on a cloud server.

The method flow 1100 includes a client device (e.g. user2 device 706) and a plurality of cloud components. The client device 704 includes the client UI component 802 and the client device local storage component 804. The client device is associated with the administrator 1102. The client device may be the administrator device 16 of Figure 1. The cloud components include the cloud service API 736, the case host component 744, the user host component 740, and the key storage 716. In some embodiments, the method 1100, after being initiated upon a user (e.g. administrator user 1102) providing a user input to the client UI 802 indicating a request to authorize a user, is performed automatically and without the need for user input.

At 1104, a message is sent from the client UI802 to the cloud service API 736 authorizing a second user (user2) to access the case 914. The operation at 1002, and the method 1100, may be initiated by receipt of user input data by the client UI 802 indicating an intention of the administrator 1102 to authorize user2 to access the case 914. The input data may include a user identifier that can be used to identify the user in the system. At 1106, the cloud service API 736 sends a message to the case host component 744 to add user2 to the case as an authorized user. At 1108, the cloud service API 736 sends a request to the user host component 740 to get the public key of user2.

At 1110, the user host component 744 sends the public key 728 of user2 to the cloud service API 736. The public key 728 may have been generated using the method 800 of Figure 8 upon first login to the system by user2. The public key 728 may be retrieved from the protected case and user data storage 718 by the user host 744. At 1112, the cloud service API 736 sends the public key 728 of user2 to the client UI 802. At 1114, the public key 728 of user2 is saved in client local storage 804. At 1116, a message is sent from the client UI 802 to the cloud service API 736 to get the administrator's encrypted case key 1118. The administrator's encrypted case key corresponds to the case key 710 that has been encrypted using the administrator's public key. The process of generating the administrator's encrypted key 1118 may be similar to the generation of encrypted case key 724 in Figure 10.

At 1120, a message is sent from the cloud service API 736 to the key storage 716 to get the administrator's encrypted case key 1118. At 1122, the administrator's encrypted case key 1118 is sent from the key storage 716 to the cloud service API 736. At 1124, the administrator's encrypted case key 1118 is sent from the cloud service API 726 to the client UI 802. At 1126, a private key 1128 of the administrator 1102 is retrieved from the client local storage 804 by the client UI 802. The private key 1128 may have been generated and stored in a manner similar to the private key 708 in Figure 8.

At 1130, the administrator's encrypted case key 1118 is decrypted using the administrator's private key 1128 to obtain the case key 710. The case key 710 may be stored in session storage. At 1132, the public key 728 of user2 is retrieved from the client local storage 804. At 1134, the case key 710 is padded (using a OAEP or similar padding scheme) and encrypted using the public key 728 of user2 to generate user2 encrypted case key 724. The user2 encrypted case key 724 can be decrypted using a private key (private key 712) corresponding to the user2 public key 728 (i.e. the private and public keys form a public/private keypair). At 1136, user2's encrypted case key 724 is uploaded from the client UI802 to the cloud service API 736. At 1138, user2's encrypted case key 724 is sent from the cloud service API 736 to the key storage 716 for storage.

Referring now to Figure 12, shown therein is a method flow 1200 of a process for viewing a case for the system of Figure 7, according to an embodiment. In this particular case, user1 806 is viewing a case. For this example, the case is case 914 uploaded using the method 900 of Figure 9. Similarly, the individual accessing the case may be another user authorized to access the case, such as user2 (e.g. authorized using either method 1000 of Figure 10 or method 1100 of Figure 11). The method 1200 is used to view a case, and in particular forensic data (i.e. files), in a secure manner.

The method flow 1200 may be encoded as computer-executable instructions executed by one or more processors located at the client device and the cloud server. For example, the method flow 1200 may be implemented as part of client-side case viewer module 550 executing on a user device and server-side case viewer module 648 executing on a cloud server. The method flow 1200 includes a client device (e.g. user1 device 704) and a plurality of cloud components. The client device 704 includes the client UI component 802 and the client device local storage component 804. The cloud components include the cloud service API 736, the case host component 744, the highly sensitive case data storage 720, and the key storage 716.

In some embodiments, the method 900, after being initiated upon the user 806 providing a user input to the client UI 802 indicating a case upload request (e.g. selecting a user interface element to upload the case), is performed automatically and without the need for user input.

At 1202, a message is sent from the client UI 802 to the cloud service API 736 to open a case (e.g. case 914). The message may be generated and sent in response to the client UI receiving user input data provided by the user 806 indicating a request to open (view) a particular case. The data sent to the cloud service API 736 may include a user identifier and a case identifier. The user identifier and case identifier may be checked against a database of case authorizations which may include a plurality of case identifiers and user identifiers associated with the case identifiers indicating the users that are authorized for a given case.

At 1204, the cloud service API 736 sends a message to the case host component 744 inquiring whether the requesting user, user1, is authorized to view the case 914. At 1206, the case host component 744 sends a message to the cloud service API indicating that the requesting user, user1 , is authorized to view the case. The determination made by the case host component 744 may include checking a case authorizations database using a case identifier and user identifier. At 1208, having determined user1 is an authorized viewer at 1206, the cloud service API 736 sends a request to the key storage 716 to get user1's encrypted case key 722.

At 1210, user1's encrypted key 722 is sent from the key storage 716 to the cloud service API 736. At 1212, user1's encrypted case key 722 is sent from the cloud service API 736 to the client UI 802. At 1214, user1's private key 708 (e.g. generated and stored using method 800 of Figure 8) is retrieved from client local storage 804. At 1216, the encrypted case key 722 is decrypted using user1's private key 708 to obtain the case key 710. The private key 708 corresponds to the public key that was used to encrypt the case key 710. The case key 710 is saved in client local storage. The client local storage may be volatile storage, such as browser session storage.

In a preferred embodiment, for the non-owner users, the case key 710 is only kept in volatile storage on the client device and only while the non-owner user is actively viewing the case. This may follow a similar approach to decrypted content, described below, where it can be cached in session storage. Such an approach may provide certain advantages, such as simplifying matters when dealing with revocation of access (e.g. an administrator can revoke a user's access by deleting the user's encrypted case key from the cloud server). For case owner users, it may be preferred to handle the case key 710 in the same manner as for non-owner users, to provide consistency in handling case keys across case owners and non-owners. This may advantageously simplify application logic while also providing centralized storage of case keys (in the cloud storage). Further, as the case owner connects to the cloud service each time to view the case anyway, downloading an encrypted case key (e.g. only a few KB in size) and decrypting the encrypted case key may have a negligible impact on performance of the system. Thus, in some embodiments, the system is configured to download the encrypted case key to the user device and decrypt the encrypted case key regardless of whether the user is the case owner or a non-owner user. In other embodiments, the system may store the case owner's case key in some form of credential storage (similar to how private keys may be stored by the system).

At 1220, a request to view an encrypted file is sent from the client UI 802 to the cloud service API 736. The request may be generated in response to user input data provided by the user 806 indicating a request or intention to view the encrypted file. For example, the client UI 802 may display a plurality of UI elements representing files from the case 914 (e.g. a file name) which may, when selected by the user 806, cause the client UI 802 to generate the user input data and the request to view the encrypted file that is sent to the cloud service API 736. At 1222, the cloud service API 736 sends a request to the highly-sensitive case data storage 720 to get the encrypted file corresponding to the request. The request may include a file identifier which can be used to retrieve the file.

At 1224, the highly-sensitive case data storage 720 sends an encrypted file, such as encrypted file1 730, to the cloud service API 736. The encrypted file 730 may have been uploaded as in method 900 of Figure 9. The encrypted file 730 has been encrypted using the case key 710. At 1226, the encrypted file 730 is sent from the cloud service API 736 to the client UI 802. At 1228, the encrypted file 730 is decrypted using the case key 710 (previously saved in local storage 804 at 1218) to generate a decrypted file 1232. At 1230, the decrypted file 1232 can be viewed by user1 on the client device. In some cases, as encrypted sensitive data (encrypted files) is downloaded to the client (browser), client-side JS may decrypt the encrypted files so the files can be viewed as plain text. Browser session storage may be used to cache already-decrypted files to avoid repeated decryption.

Various further embodiments of the systems and methods described above will now be described. In some embodiments, the systems of the present disclosure may incorporate different levels of access for different users through the use of additional keys. The different levels of access may be based, for example, on classification or labels. The classifications (groups) or labels may apply to users (i.e. viewers of the forensic data; e.g. group1 having a first level of access and group2 having a second level of access) or to the forensic data (e.g. a first category of file having a first level of access and a second category of file having a second level of access). The varying classifications/labels apply to the data and users are assigned to roles or groups that give them access to data from one or more classifications/labels.

In a first embodiment, the system may incorporate different levels of access for different users by generating more than one case (secret) key for a particular case (e.g. upon upload of a case to the cloud server 12), where there is one (unique) case key for each classification group. The system then encrypts sensitive data (forensic data, files) with the case key corresponding to their classification. Such an approach may work well where the number of (classification) groups is low and/or the classification groups do not overlap (e.g. CSAM / Not CSAM).

In a second embodiment, the system may incorporate different levels of access for different users by encrypting all sensitive data with a "base key". The sensitive data is then encrypted again with one case key per additional access requirement. This kind of additive approach may work well where groups overlap and represent different kinds or levels of access. This is because it allows for groups to be mixed and matched without a key explosion. In an example, a case may be shared internationally, and it may be desired to classify certain material (e.g. sensitive forensic data) as unclassified/restricted/confidential etc. Material may be further restricted, for example to certain groups (e.g. Group A eyes only, Group B eyes only, etc.), by using only one additional key per access requirement (rather than one key for each combination of permissions). A limitation of this embodiment is that the set of groups applied to a document cannot represent a union of permissions, but must be an intersection, e.g. it must be limited to those in Groups A **and** B, not Groups A **or** B. For example, it could not represent for Group A/Group B eyes only, which would represent the union of the set of users from Group A or Group B. This is because in order to do this, the Group B users would need to also have the key for the Group A users, which breaks the security of the data intended for Group A eyes only.

In an embodiment, if a user's authorization is removed, the system may be configured to automatically delete the encrypted key belonging to that previously authorized user from the cloud server 12 (e.g. from key storage 716) upon revocation of the user's authorization. This may be performed in addition to standard user access control mechanisms.

In an embodiment, the system may be configured to encrypt, by default, all forensic data files of a certain type that are uploaded to the cloud server 12 with case data. Such operation of the system may be embodied as a configuration that can be changed by the user. For example, the configuration to automatically encrypt all forensic data may be an opt-out setting rather than an opt-in setting (that the user has to select). In this way, encryption of forensic data can be removed or disabled when not necessary (as determined by the user), which may provide a far more secure approach compared to adding encryption afterwards and is generally no less technically feasible. One particular example in which such an embodiment may have particular advantages is when the forensic data being uploaded to the cloud server 12 is exceptionally sensitive material, such as CSAM. The character of such material may not be known at the time a case is first uploaded to the cloud server 12, and thus configuring the system to encrypt all uploaded forensic data automatically, and having such configuration be a setting that can be opted out of by the user, may further secure the forensic data being uploaded (such as by ensuring the sensitive material is never on the cloud server in an unencrypted form).

In another embodiment, the system may be configured to allow a user to generate a new keypair (public and private keys), such as from a user account settings page, for example upon the user losing access to their private key(s). The user may provide input data via a user interface of the system indicating a request to generate a new keypair. Upon receiving the request, the system may automatically notify the administrator and/or case owner (e.g. the user assigned to be case owner or the user who initially uploaded the case to the cloud server) for each case that the new keypair requesting user has authorization to view. For example, the system may store in association with a user account a list of cases (e.g. via a unique case identifier) that each user (e.g. identified via a unique user identifier) is authorized to view. The system may also store the administrator(s) and case owner(s) for each case in the system (for example, each case identifier may have one or more administrator identifiers and one or more case owner identifiers linked thereto). The notification may be an electronic message or the like, which may be presented in a user interface (such as a user account home page or messages page). Having been notified, the administrator and/or case owner may upload the case key for the requesting user again, encrypted with the requesting user's new public key.

Advantageously, system performance should not be noticeably affected by decryption, as network IO is expected to incur a greater delay in viewing files of the case than decrypting with a symmetric cipher.

The system may be designed such that the secure processes (e.g. encryption, etc.) described herein are not detrimental to the user experience but also not invisible. For example, the system may be configured to generate and display a message or the like via a user interface on the client device indicating that a keypair is being generated for the user. Such a message or other graphical representation may be displayed in response to a user requesting keypair generation or at completion of keypair generation. Such feature of the system may advantageously give system users the rightful impression that sensitive data is being treated securely by the system. Completely invisible data protection may impart a feeling of improper data handling to the user.

While the above description provides examples of one or more apparatus, methods, or systems, it will be appreciated that other apparatus, methods, or systems may be within the scope of the claims as interpreted by one of skill in the art.

## Claims

1. A system (10) for securing sensitive forensic data in the cloud, the system comprising:
a cloud server (600) including a processor (102, 604) configured to execute a cloud service, the cloud server in communication with a cloud data storage (630, 632); and
a client device (14, 16) having a first user (User1), the client device including a processor (504) configured to execute a client user interface ("Ul") module for communicating with the cloud service (714), the client UI module configured to:
upon a first login of the first user to the cloud service, generate an asymmetric keypair for the first user including a first user public key (726) and a first user private key (708), store the first user private key in a local storage on the client device, and send the first user public key (726) to the cloud server;
in response to a user command to upload case data to the cloud service, generate a symmetric case key (710), encrypt sensitive forensic data of the case data using the symmetric case key to generate encrypted sensitive forensic data, encrypt the symmetric case key using the first user public key to generate a first user encrypted symmetric case key (722), and send the case data, the encrypted sensitive forensic data, and the first user encrypted symmetric case key to the cloud server;
and wherein the cloud service (714) is configured to store the case data, the encrypted sensitive forensic data, and the first user encrypted symmetric case key in the cloud data storage.

2. The system of claim 1, wherein the client UI module is further configured to:
upon viewing the case data, receive the case data and the encrypted sensitive forensic data from the cloud server, decrypt the encrypted sensitive forensic data using the symmetric case key to obtain unencrypted sensitive forensic data, and display the unencrypted sensitive forensic data.

3. The system of claim 2, wherein the symmetric case key used to decrypt the encrypted sensitive forensic data is received from the cloud server as the first user encrypted symmetric case key and decrypted using the first user private key.

4. The system of any one of claims 1 to 3, wherein the client UI module is further configured to authorize a second user (User2) to view the case data by:
sending a request to the cloud service to authorize a second user to view the case data, receiving a second user public key (728) from the cloud server, encrypting the symmetric case key using the second user public key to generate a second user encrypted symmetric case key (724), and sending the second user encrypted case key to the cloud service for storage in the cloud data storage; or
sending a request to the cloud service to authorize a second user to view the case data, receiving the first user encrypted symmetric case key and a second user public key from the cloud service, decrypting the first user encrypted symmetric case key using the first user private key, encrypting the symmetric case key using the second user public key to generate a second user encrypted symmetric case key, and sending the second user encrypted symmetric case key to the cloud service for storage in the cloud data storage.

5. The system of any one of claims 1 to 4, wherein the client UI module is further configured to:
in response to the user command, generate a second symmetric case key; and determine whether to encrypt the sensitive forensic data with the symmetric case key or the second symmetric case key based on a classification group assigned to the sensitive forensic data; or
encrypt the encrypted sensitive forensic data using a second symmetric case key based on a determination that the sensitive forensic data is of a particular classification group.

6. The system of any one of claims 1 to 5, wherein the local storage on the client device is persistent browser storage or credential storage as provided by an operating system of the client device.

7. The system of any one of claims 1 to 6, wherein the client device includes a browser session storage, and wherein the client UI module is further configured to use the browser session storage to cache the unencrypted sensitive forensic data after decryption.

8. A computing device for securing sensitive data in the cloud, the computing device comprising:
a processor (102) in communication with a memory, the processor configured to execute a client user interface ("Ul") module for communicating with a cloud service via a network, the client UI module configured to:
upon a first login of the first user (User1) to the cloud service, generate an asymmetric keypair for the first user including a first user public key and a first user private key, store the first user private key in a local storage on the client device, and send the first user public key to the cloud server (600); and
in response to a user command to upload first data to the cloud service, generate a symmetric key (524), encrypt sensitive data of the first data using the symmetric key to generate encrypted sensitive data, encrypt the symmetric key using the first user public key to generate a first user encrypted symmetric key, and send the first data, the encrypted sensitive data, and the first user encrypted symmetric key to the cloud server.

9. The device of claim 8, wherein the client UI module is further configured to:
upon viewing the first data, receive the first data and the encrypted sensitive data from the cloud server, decrypt the encrypted sensitive data using the symmetric key to obtain unencrypted sensitive data, and display the unencrypted sensitive data.

10. The device of claim 9, wherein the symmetric key used to decrypt the encrypted sensitive data is received from the cloud server as the first user encrypted symmetric key and decrypted using the first user private key.

11. The device of any one of claims 8 to 10, wherein the client UI module is further configured to authorize a second user (User2) to view the first data by:
sending a request to the cloud service (714) to authorize a second user to view the first data, receiving a second user public key (728) from the cloud server, encrypting the symmetric key using the second user public key (712) to generate a second user encrypted symmetric key, and sending the second user encrypted symmetric key to the cloud service for storage in the cloud data storage; or
sending a request to the cloud service (714) to authorize a second user to view the first data, receiving the first user encrypted symmetric key and a second user public key from the cloud service, decrypting the first user encrypted symmetric key using the first user private key, encrypting the symmetric key using the second user public key to generate a second user encrypted symmetric key, and sending the second user encrypted symmetric key to the cloud service for storage in the cloud data storage.

12. The device of any one of claims 8 to 11, wherein the client UI module is further configured to:
in response to the user command, generate a second symmetric key and determine whether to encrypt the sensitive data with the symmetric key or the second symmetric key based on a classification group assigned to the sensitive data; or
encrypt the encrypted sensitive data using a second symmetric key based on a determination that the sensitive data is of a particular classification group.

13. The device of any one of claims 8 to 12, wherein the local storage on the client device is persistent browser storage or credential storage as provided by an operating system of the client device.

14. The device of any one of claims 8 to 13, wherein the client device includes a browser session storage, and wherein the client UI module is further configured to use the browser session storage to cache the unencrypted sensitive data after decryption.

15. A method for securing sensitive forensic data in the cloud when performing digital forensic investigations, the method comprising:
upon a first login of a first user on a client device to a digital forensics cloud service:
generating an asymmetric keypair for the first user including a first user public key and a first user private key;
storing the first user private key in a local storage on the client device; and
sending the first user public key from the client device to a cloud server configured to execute the cloud service;
in response to a user command at the client device to upload case data from the client device to the cloud service, the case data being data related to a specific digital forensic investigation, performing by the client device:
generating a symmetric case key;
encrypting sensitive forensic data of the case data using the symmetric case key to generate encrypted sensitive forensic data;
encrypting the symmetric case key using the first user public key to generate a first user encrypted symmetric case key; and
sending the case data, the encrypted sensitive forensic data, and the first user encrypted symmetric case key to the cloud server.
